# EUROPEAN PATENT SPECIFICATION

(11) **EP 2 493 124 B1**
(45) Date of publication and mention of the grant of the patent: **19.03.2014**
(21) Application number: 10832585.3
(22) Date of filing: 14.09.2010
(51) Int. Cl.: H04L 12/931

(54) **IMPLEMENTING METHOD AND DEVICE FOR VIRTUAL LOCAL AREA NETWORK STACK ACCESSING VIRTUAL PRIVATE WIRE SERVICE**
VERFAHREN UND VORRICHTUNG ZUM EINRICHTEN EINES VIRTUELLEN PRIVATEN KABELDIENSTES ZUM ZUGRIFF AUF EINEN VIRTUELLEN LAN-STAPEL
PROCÉDÉ DE MISE EN OEUVRE ET DISPOSITIF PERMETTANT À UNE PILE DE RÉSEAUX LOCAUX VIRTUELS D'ACCÉDER À UN SERVICE FILAIRE PRIVÉ VIRTUEL

(30) Priority: 27.11.2009 CN 200910241265
(43) Date of publication of application: 29.08.2012
(73) Proprietor: ZTE Corporation, Shenzhen City, Guangdong Province 518057, (CN)
(72) Inventor: PAN, Tingshan, Shenzhen Guangdong 518057 (CN)
(74) Representative: Zerbi, Guido Maria
(86) International application number: PCT/CN2010/076881
(87) International publication number: WO 2011/063678

(56) References cited:
- EP-A1- 1 585 263
- CN-A- 1 791 065
- CN-A- 1 838 629
- CN-A- 101 026 532
- CN-A- 101 707 562
- GB-A- 2 451 738
- US-A1- 2009 154 470

## Description

### Technical Field

The present invention relates to an implementation technology of a Virtual Private Wire Service (VPWS), and particularly, to an implementation method and apparatus for a Virtual Local Area Network Stacking (QINQ) accessing a VPWS as described in the preamble of the independent claims. The features of the preamble of the independent claims are known from US 2009/154470A1.

### Background of the Related Art

The VPWS is a Layer 2 Virtual Private Network (VPN) technology based on Multi-Protocol Label Switch (MPLS) and Ethernet technologies. In the past decade, the Ethernet technology has obtained rapid development, the rate is upgraded from 10M to 100M and even upgraded to 1000M, and the deployment costs are lower and lower. Therefore, the Ethernet technology is applied more and more widely in an Enterprise Network, and has increasingly application in an operation network, and particularly in a Metropolitan Area Network (MAN). In order to provide a point to point service in the MAN/Wide Area Network (WAN), the VPWS emerges as the times require.

The VPWS supports multiple access methods including: a port access mode, an access mode that is decided by a port and a Virtual Local Area Network (VLAN) together, an access mode that is decided by a port and a QINQ together.

In addition, the VPWS is generally implemented by a switch or a network processer. If the VPWS is implemented by the switch and accesses through the QINQ, now many switches, after an MPLS process, do not support a replacement of two layers of VLAN labels of the QINQ packet, but only support a replacement of the outer layer VLAN labels, which make the application of the QINQ accessing the VPWS be limited substantially, because the inner layer VLAN labels of two ends of the switch must be consistent.

### Summary of the Invention

In view of this, the main objective of the present invention is to provide an implementation method and apparatus for a QINQ accessing a VPWS.

The features of the method and apparatus according to the present invention are defined in the independent claims.

An implementation method for a QINQ accessing a VPWS, comprising:
configuring an MPLS on a switch, so as to make an MPLS label be stripped from an MPLS packet which enters through a network side port of the switch to obtain a QINQ packet and then send the QINQ packet through a user side port of the switch;
setting a self-loop port of the switch;
modifying an MPLS configuration of the switch, so as to make the MPLS label be stripped from the MPLS packet which enters through the network side port of the switch to obtain the QINQ packet and then send the QINQ packet through the self-loop port; and replacing an outer layer Virtual Local Area Network (VLAN) label of the QINQ packet with an arbitrary value;
setting a corresponding relation between the arbitrary value and the two layers of VLAN labels of the user side port, and replacing the two layers of VLAN labels of the QINQ packet with the two layers of VLAN labels of the user side port according to the corresponding relation;
setting a corresponding relation between the two layers of VLAN labels of the user side port and the user side port, and redirecting the QINQ packet which enters through the self-loop port and has replaced the two layers of VLAN labels to the user side port according to the corresponding relation.

Wherein, the step of setting the corresponding relation between the arbitrary value and the two layers of VLAN labels of the user side port comprises: setting an export ACL at the self-loop port, wherein the export ACL stores the corresponding relation between the arbitrary value and the two layers of VLAN labels of the user side port.

Wherein, the step of setting the corresponding relation between the two layers of VLAN labels of the user side port and the user side port comprises: setting an entrance ACL at the self-loop port, wherein the entrance ACL stores the corresponding relation between the two layers of VLAN labels of the user side port and the user side port.

Wherein, after setting the self-loop port of the switch, the method further comprises: setting an export storm control at the self-loop port.

Wherein, the step of configuring the MPLS further comprises: encapsulating a QINQ packet which enters through the user side port of the switch with an MPLS label to obtain an MPLS packet, and then sending the MPLS packet through the network side port of the switch.

An implementation apparatus for a QINQ accessing a VPWS, comprising: an MPLS configuration module, a self-loop port setting module, an MPLS configuration modification module, a VLAN label replacement module and a QINQ packet redirection module; wherein,
the MPLS configuration module is configured to configure an MPLS on a switch, so as to make an MPLS label be stripped from an MPLS packet which enters through a network side port of the switch to obtain a QINQ packet and then send the QINQ packet through a user side port of the switch;
the self-loop setting module is configured to set a self-loop port of the switch;
the MPLS configuration modification module is configured to modify an MPLS configuration of the switch, so as to make the MPLS label be stripped from the MPLS packet which enters through the network side port of the switch to obtain the QINQ packet and then send the QINQ packet through the self-loop port; and to replace an outer layer VLAN label of the QINQ packet with an arbitrary value;
the VLAN label replacement module is configured to set a corresponding relation between the arbitrary value and the two layers of VLAN labels of the user side port, and replace the two layers of VLAN labels of the QINQ packet with the two layers of VLAN labels of the user side port according to the corresponding relation;
the QINQ packet redirection module is configured to set a corresponding relation between the two layers of VLAN labels of the user side port and the user side port, and redirect the QINQ packet which enters through the self-loop port and has replaced the two layers of VLAN labels to the user side port according to the corresponding relation.

Wherein, the self-loop port setting module is further configured to set an export storm control at the self-loop port after setting the self-loop port.

Wherein, the MPLS configuration module is further configured to encapsulate a QINQ packet which enters through the user side port of the switch with an MPLS label to obtain an MPLS packet, and then send the MPLS packet through the network side port of the switch.

It can be seen from the above technical scheme that, the present invention sets the self-loop port on the switch, so that during forwarding, the QINQ packet is designated to be sent out through that self-loop port, replaces the two layers of VLAN labels of the QINQ packet with the two layers of VLAN labels of the user side port of the switch at the self-loop port, and then redirects the QINQ packet which loops and enters through the self-loop port and has replaced the two layers of VLAN labels to the user side port; thus, a replacement of the two layers of VLAN labels of the QINIQ packet is implemented, thereby making the switch be able to implement the QINQ accessing the VPWS inflexibly.

### Brief Description of Drawings

FIG. 1 is a flow chart of an implementation method for a QINQ accessing a VPWS according to the present invention;
FIG. 2 is a flow chart of an embodiment for a QINQ accessing a VPWS according to the present invention;
FIG. 3 is a structure diagram of an implementation apparatus for a QINQ accessing a VPWS according to the present invention.

### Preferred Embodiments of the Present Invention

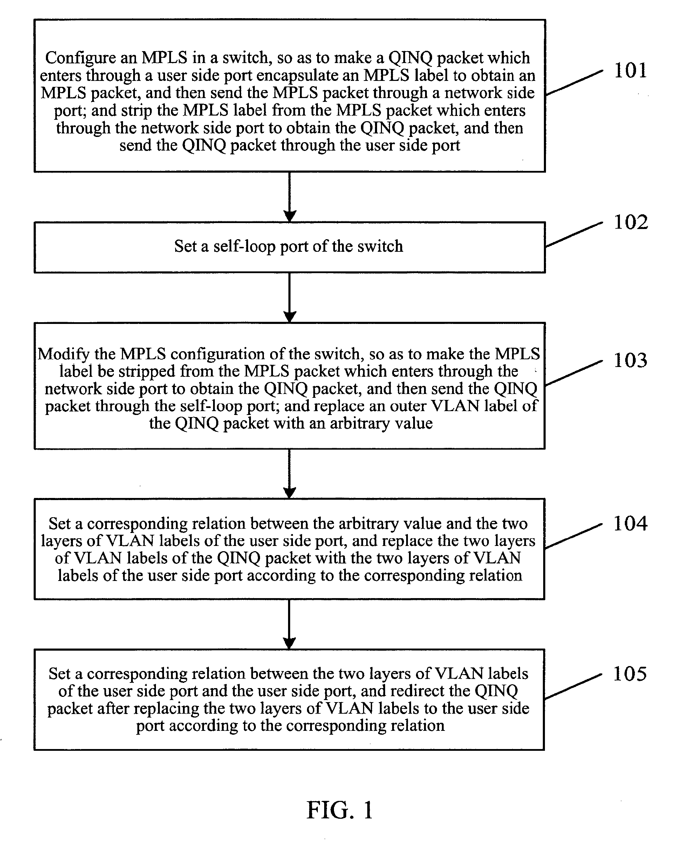

As shown in FIG. 1, an implementation method for a QINQ accessing a VPWS according to the present invention includes the following steps.

In step 101, an MPLS is configured in a switch, so as to make a QINQ packet which enters through a user side port of the switch encapsulate an MPLS label to obtain an MPLS packet, and then send the MPLS packet through a network side port of the switch; and the MPLS label is stripped from the MPLS packet which enters through the network side port to obtain the QINQ packet, and then send the QINQ packet through the user side port.

In step 102, a self-loop port of the switch is set.

Specifically, an idle port of the switch is set as self-loop, and that port is another port besides the above-mentioned user side port and network side port.

In addition, an export storm control can also be set at that port, to make that port only be used by the VPWS.

In step 103, the MPLS configuration of the switch is modified, to make the MPLS label be stripped from the MPLS packet which enters through the network side port to obtain the QINQ packet, and then send the QINQ packet through the self-loop port; and an outer VLAN label of the QINQ packet is replaced with an arbitrary value;

Wherein, the QINQ packet is sent out through the self-loop port and also enters through the self-loop port.

Although the switch can not obtain the two layers of VLAN label information of the QINQ packet, the switch can replace the outer layer VLAN label of the QINQ packet according to the related art. Therefore, in step 103, the outer layer VLAN label of the QINQ massage is replaced with the arbitrary value, thereby in the subsequent process, a corresponding relation between the arbitrary value and the two layers of VLAN labels of the user side port can be set correctly according to a set export Access Control List (ACL), and the two layers of VLAN labels of the QINQ packet can be modified according to the corresponding relation.

In step 104, a corresponding relation between the arbitrary value and the two layers of VLAN labels of the user side port is set, and the two layers of VLAN labels of the QINIQ packet is replaced with the two layers of VLAN labels of the user side port according to the corresponding relation.

In a specific implementation, the export ACL is set at the self-loop port, and the export ACL stores the corresponding relation between the arbitrary value and the two layers of VLAN labels of the user side port; after that, the arbitrary value can be matched with the two layers of VLAN labels of the user side port according to the corresponding relation in the export ACL, and then the two layers of VLAN labels of the QINQ packet is replaced with the two layers of VLAN labels of the user side port corresponding to the arbitrary value.

Wherein, the switch itself has known the information of the two layers of VLAN labels of the user side port.

In step 105, a corresponding relation between the two layers of VLAN labels of the user side port and the user side port is set, and the QINQ packet, which enters through the self-loop port and in which the two layers of VLAN labels are replaced, is redirected to the user side port according to the corresponding relation.

In a specific implementation, an entrance ACL is set at the self-loop port, and the entrance ACL stores the corresponding relation between the two layers of VLAN labels of the user side port and the user side port; after that, the two layers of VLAN labels of the user side port can be matched with the user side port according to the corresponding relation in the entrance ACL, and then the QINQ packet which enters through the self-loop port is redirected to the user side port.

By now, a replacement of the two layers of VLAN labels of the QINQ packet has been implemented.

A method for implementing a QINQ accessing a VPWS on a switch according to the present invention will be further illustrated in detail by an embodiment as follows.

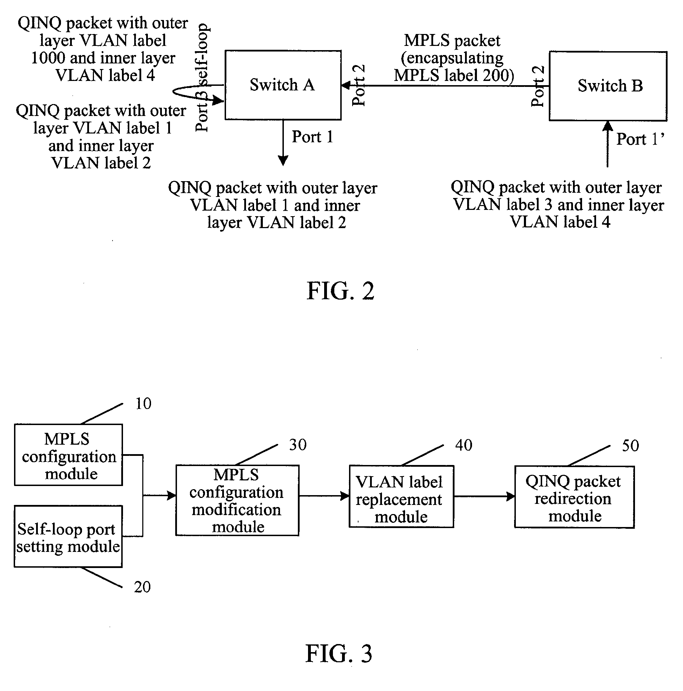

As show in FIG. 2, assuming that two Provider Edge (PE) switches A, B are directly connected through network side ports 2, a user side port 1 of the switch A accesses through an outer layer VLAN 1 and an inner layer VLAN 2 and a user side port 1' of the switch B accesses through an outer layer VLAN 3 and an inner layer VLAN 4. Then, a configuration flow of the switch A is as follows.

In step 201, an MPLS is configured in the switch A, so as to make a QINQ packet which has the outer layer VLAN label of 1 and the inner layer VLAN label of 2 and enters through the user side port 1 encapsulate an MPLS label 100 to obtain an MPLS packet, and then the send MPLS packet through the network side port 2; and an MPLS label is stripped from the MPLS packet which has the MPLS label of 200 and enters through the network side port 2 to obtain a QINQ packet, and then send the QINQ packet through the user side port 1.

In step 202, a port 3 of the switch A is set as self-loop, and an export storm control is set at the port 3.

In step 203, the MPLS configuration of the switch is modified, so as to make the MPLS label is stripped from the MPLS packet which has the MPLS label of 200 and enters through the network side port 2 to obtain the QINQ packet, and then send the QINQ packet through the port 3 and the outer layer VLAN label of the QINQ packet is replaced with 1000.

In step 204, an export ACL is set at the port 3, and the export ACL stores a corresponding relation between the outer layer VLAN label 1000 and the outer layer VLAN label 1, the inner VLAN label 2 of the user side port; and according to the corresponding relation in the export ACL, the outer VLAN label of the QINQ packet is replaced with 1 and the inner VLAN label of the QINQ packet is replaced with 2.

In step 205, an entrance ACL is set at the port 3, and the entrance ACL stores a corresponding relation between the outer layer VLAN label of 1, the inner VLAN label of 2 and user side port 1; and according to the corresponding relation in the entrance ACL, the QINQ packet, which has the outer layer label of 1 and the inner layer label of 2 and enters through the port 3, is redirected to the user side port 1.

A configuration flow of the switch B is similar to the configuration flow of the switch A, which will not go into the details here. After the similar configuration of the switch B is performed, a forwarding flow of the packet from the switch B to the switch A is as follows:
a QINQ packet, which has an outer layer VLAN label of 3 and an inner layer VLAN label of 4 and enters through the user side port 1' of the switch B, encapsulates an MPLS label 200 to obtain an MPLS packet, and then the MPLS packet is sent through the network side port 2;
after the switch A receives the MPLS packet, the MPLS label 200 is stripped to obtain a QINQ packet, the outer layer VLAN label of the QINQ packet is replaced with 1000, and then the packet is sent through the port 3;
according to the export ACL set at the port 3, the outer layer VLAN label of the QINQ packet is replaced with 1 and the inner layer VLAN label is replaced with 2, and then the QINQ packet is looped and enters through the port 3;
according to the entrance ACL set at the port 3, the QINQ packet is redirected to a real destination export, i.e., user side port 1. Thus, the VPWS communication from the switch B to the switch A is implemented.

A forwarding flow of the packet from the switch A to the switch B is similar to the above forwarding flow from the switch B to the switch A, which therefore will not go into the details here.

In order to implement the above method, the present invention correspondingly provides an implementation apparatus for a QINQ accessing a VPWS. As shown in FIG. 3, the apparatus includes: an MPLS configuration module 10, a self-loop port setting module 20, an MPLS configuration modification module 30, a VLAN label replacement module 40 and a QINQ packet redirection module 50.

The MPLS configuring module 10 is configured to configure an MPLS on a switch, so as to make a QINQ packet which enters through a user side port of the switch encapsulate with an MPLS label to obtain an MPLS packet, and then send the MPLS packet through a network side port of the switch; and make an MPLS label be stripped from an MPLS packet which enters through the network side port of the switch to obtain a QINQ packet and then send the QINQ packet through the user side port of the switch.

The self-loop configuring module 20 is configured to set a self-loop port of the switch, and is also configured to set an export storm control at the self-loop port.

The MPLS configuration modification module 30 is configured to modify an MPLS configuration of the switch, so as to make the MPLS label be stripped from the MPLS packet which enters through the network side port of the switch to obtain the QINQ packet and then send the QINQ packet through the self-loop port; and to replace an outer layer VLAN label of the QINQ packet with an arbitrary value.

The VLAN label replacement module 40 is configured to set a corresponding relation between the arbitrary value and the two layers of VLAN labels of the user side port, and replace the two layers of VLAN labels of the QINQ packet with the two layers of VLAN labels of the user side port according to the corresponding relation.

Wherein, the corresponding relation between the arbitrary value and the two layers of VLAN labels of the user side port is stored in an export ACL, and the export ACL is set at the self-loop port.

The QINQ packet redirection module 50 is configured to set a corresponding relation between the two layers of VLAN labels of the user side port and the user side port, and redirect the QINQ packet which enters through the self-loop port and has replaced the two layers of VLAN labels to the user side port according to the corresponding relation.

Wherein, the corresponding relation between the two layers of VLAN labels of the user side port and the user side port is stored in an entrance ACL, and the entrance ACL is set at the self-loop port.

The above description is only the preferred embodiments of the present invention, and is not intended to limit the protection scope of the present invention.

## Claims

1. An implementation method for accessing a Virtual Private Wire Service, VPWS, through QINQ, comprising:
Configuring (101) a Multi-Protocol Label Switching, MPLS, on a switch, so as to make an MPLS label be stripped from an MPLS packet which enters through a network side port of the switch to obtain a QINQ packet and then send the QINQ packet through a user side port of the switch, wherein the QINQ packet comprises two Virtual Local Area Network, VLAN, labels, i.e. an inner layer VLAN label and an outer layer VLAN label;setting a loopback port of the switch (102); **characterized by**:
modifying (103) an MPLS configuration of the switch, so as to make the MPLS label be stripped from the MPLS packet which enters through the network side port of the switch to obtain the QINQ packet and then send the QINQ packet through the loopback port; and replacing the outer layer VLAN label of the QINQ packet with an arbitrary value;
setting a first corresponding relation between the arbitrary value and two VLAN labels of the user side port, and replacing the two VLAN labels of the QINQ packet with the two VLAN labels of the user side port according to the first corresponding relation when sending the QINQ packet through the loopback port (104);
setting a second corresponding relation between the user side port and the two VLAN labels of the user side port , and when the QINQ packet which has the two VLAN labels of the user side port entering back through the loopback port, redirecting the QINQ packet to the user side port according to the second corresponding relation (105).

2. The implementation method according to claim 1, wherein, the step of setting the first corresponding relation between the arbitrary value and two VLAN labels of the user side port comprises: setting an export Access Control List, ACL, at the loopback port, wherein the export ACL stores the first corresponding relation between the arbitrary value and the two VLAN labels of the user side port.

3. The implementation method according to claim 1 or 2, wherein, the step of setting the second corresponding relation between the user side port and the two VLAN labels of the user side port comprises: setting an entrance ACL at the loopback port, wherein the entrance ACL stores the second corresponding relation between the two VLAN labels of the user side port and the user side port.

4. The implementation method according to claim 3, wherein, after setting the loopback port of the switch, the method further comprises: setting an export storm control at the loopback port.

5. The implementation method according to claim 1, wherein, the step of configuring the MPLS further comprises: encapsulating a QINQ packet which enters through the user side port of the switch with an MPLS label to obtain an MPLS packet, and then sending the MPLS packet through the network side port of the switch.

6. An implementation apparatus for accessing a Virtual Private Wire Service, VPWS, through QINQ, comprising: an Multi-Protocol Label Switching (MPLS) configuration module (10), a loopback port setting module (20), an MPLS configuration modification module (30), a VLAN label replacement module (40) and a QINQ packet redirection module (50); wherein,
the MPLS configuration module (10) is configured to configure an MPLS on a switch, so as to make an MPLS label be stripped from an MPLS packet which enters through a network side port of the switch to obtain a QINQ packet and then send the QINQ packet through a user side port of the switch, wherein the QINQ packet comprises two Virtual Local Area Network ,VLAN, labels, i.e. an inner layer VLAN label and an outer layer VLAN label;
the loopback setting module (20) is configured to set a loopback port of the switch;
**characterized by** that :
the MPLS configuration modification module (30) is configured to modify an MPLS configuration of the switch, so as to make the MPLS label be stripped from the MPLS packet which enters through the network side port of the switch to obtain the QINQ packet and then send the QINQ packet through the loopback port; and to replace an outer layer VLAN label of the QINQ packet with an arbitrary value;
the VLAN label replacement module (40) is configured to set a first corresponding relation between the arbitrary value and two VLAN labels of the user side port, and replace the two layers of VLAN labels of the QINQ packet with the two VLAN labels of the user side port according to the first corresponding relation when sending the QINQ packet through the self-loop port;
the QINQ packet redirection module (50) is configured to set a second corresponding relation between the user side port and the two VLAN labels of the user side port, and when the QINQ packet which has the two VLAN labels of the user side port entering through the loopback port, redirect the QINQ packet to the user side port according to the second corresponding relation.

7. The implementation apparatus according to claim 6, wherein, the loopback port setting module (20) is further configured to set an export storm control at the loopback port after setting the loopback port.

8. The implementation apparatus according to claim 6 or 7, wherein, the MPLS configuration module (10) is further configured to encapsulate a QINQ packet which enters through the user side port of the switch with an MPLS label to obtain an MPLS packet, and then send the MPLS packet through the network side port of the switch.

## Patentansprüche

1. Ein Implementierungsverfahren zum Zugreifen auf einen Virtual-Private-Wire-Service, VPWS, durch QINQ, das Folgendes beinhaltet:
Konfigurieren (101) eines Multi-Protocol-Label-Switching, MPLS, auf einem Switch, so dass ein MPLS-Label von einem MPLS-Paket, das durch einen netzseitigen Anschluss des Switches eintritt, abgelöst wird, um ein QINQ-Paket zu erhalten, und das QINQ-Paket durch einen benutzerseitigen Anschluss des Switches gesendet wird, wobei das QINQ-Paket zwei Virtual-Local-Area-Network(VLAN)-Labels, d. h. ein VLAN-Label der inneren Schicht und ein VLAN-Label der äußeren Schicht, beinhaltet; Festsetzen eines Rückschleifenanschlusses des Switches (102); **gekennzeichnet durch** Folgendes:
Modifizieren (103) einer MPLS-Konfiguration des Switches, so dass das MPLS-Label von dem MPLS-Paket, das **durch** den netzseitigen Anschluss des Switches eintritt, abgelöst wird, um das QINQ-Paket zu erhalten, und dann Senden des QINQ-Pakets durch den Rückschleifenanschluss und Ersetzen des VLAN-Labels der äußeren Schicht des QINQ-Pakets **durch** einen willkürlichen Wert;
Festsetzen einer ersten entsprechenden Beziehung zwischen dem willkürlichen Wert und zwei VLAN-Labels des benutzerseitigen Anschlusses und Ersetzen der zwei VLAN-Labels des QINQ-Pakets **durch** die zwei VLAN-Labels des benutzerseitigen Anschlusses gemäß der ersten entsprechenden Beziehung, wenn das QINQ-Paket durch den Rückschleifenanschluss (104) gesendet wird;
Festsetzen einer zweiten entsprechenden Beziehung zwischen dem benutzerseitigen Anschluss und den zwei VLAN-Labels des benutzerseitigen Anschlusses, und wenn das QINQ-Paket, das die zwei VLAN-Labels des benutzerseitigen Anschlusses aufweist, **durch** den Rückschleifenanschluss wieder eintritt, Umleiten des QINQ-Pakets zu dem benutzerseitigen Anschluss gemäß der zweiten entsprechenden Beziehung (105).

2. Implementierungsverfahren gemäß Anspruch 1, wobei der Schritt des Festsetzens der ersten entsprechenden Beziehung zwischen dem willkürlichen Wert und zwei VLAN-Labels des benutzerseitigen Anschlusses Folgendes beinhaltet: Festsetzen einer Export-Zugriffskontrollliste (Export Access Control List, Export-ACL), an dem Rückschleifenanschluss, wobei die Export-ACL die erste entsprechende Beziehung zwischen dem willkürlichen Wert und den zwei VLAN-Labels des benutzerseitigen Anschlusses speichert.

3. Implementierungsverfahren gemäß Anspruch 1 oder 2, wobei der Schritt des Festsetzens der zweiten entsprechenden Beziehung zwischen dem benutzerseitigen Anschluss und den zwei VLAN-Labels des benutzerseitigen Anschlusses Folgendes beinhaltet: Festsetzen einer Eintritts-ACL an dem Rückschleifenanschluss, wobei die Eintritts-ACL die zweite entsprechende Beziehung zwischen den zwei VLAN-Labels des benutzerseitigen Anschlusses und dem benutzerseitigen Anschluss speichert.

4. Implementierungsverfahren gemäß Anspruch 3, wobei nach dem Festsetzen des Rückschleifenanschlusses des Switches das Verfahren ferner Folgendes beinhaltet: Festsetzen einer Export-Sturmkontrolle an dem Rückschleifenanschluss.

5. Implementierungsverfahren gemäß Anspruch 1, wobei der Schritt des Konfigurierens der MPLS ferner Folgendes beinhaltet: Verkapseln eines QINQ-Pakets, das durch den benutzerseitigen Anschluss des Switches eintritt, mit einem MPLS-Label, um ein MPLS-Paket zu erhalten, und dann Senden des MPLS-Pakets durch den netzseitigen Anschluss des Switches.

6. Eine Implementierungsvorrichtung zum Zugreifen auf einen Virtual-Private-Wire-Service, VPWS, durch QINQ, die Folgendes beinhaltet: ein Multi-Protocol-Label-Switching(MPLS)-Konfigurationsmodul (10), ein Rückschleifenanschlussfestsetzungsmodul (20), ein MPLS-Konfigurationsmodifikationsmodul (30), ein VLAN-Label-Ersetzungsmodul (40) und ein QINQ-Paket-Umleitungsmodul (50); wobei das MPLS-Konfigurationsmodul (10) konfiguriert ist, um einen MPLS auf einem Switch zu konfigurieren, so dass ein MPLS-Label von einem MPLS-Paket, das durch einen netzseitigen Anschluss des Switches eintritt, abgelöst wird, um ein QINQ-Paket zu erhalten, und das QINQ-Paket durch einen benutzerseitigen Anschluss des Switches gesendet wird, wobei das QINQ-Paket zwei Virtual-Local-Area-Network(VLAN)-Labels, d. h. ein VLAN-Label der inneren Schicht und ein VLAN-Label der äußeren Schicht, beinhaltet;
das Rückschleifenanschlussfestsetzungsmodul (20) konfiguriert ist, um einen Rückschleifenanschluss des Switches festzusetzen;
**gekennzeichnet dadurch, dass**:
das MPLS-Konfigurationsmodifikationsmodul (30) konfiguriert ist, um eine MPLS-Konfiguration des Switches zu modifizieren, so dass das MPLS-Label von dem MPLS-Paket, das durch den netzseitigen Anschluss des Switches eintritt, abgelöst wird, um das QINQ-Paket zu erhalten, und dann das QINQ-Paket durch den Rückschleifenanschluss gesendet wird, und das VLAN-Label der äußeren Schicht des QINQ-Pakets durch einen willkürlichen Wert zu ersetzen;
das VLAN-Label-Ersetzungsmodul (40) konfiguriert ist, um eine erste entsprechende Beziehung zwischen dem willkürlichen Wert und zwei VLAN-Labels des benutzerseitigen Anschlusses festzusetzen und die zwei Schichten an VLAN-Labels des QINQ-Pakets durch die zwei VLAN-Labels des benutzerseitigen Anschlusses gemäß der ersten entsprechenden Beziehung zu ersetzen, wenn das QINQ-Paket durch den Rückschleifenanschluss gesendet wird;
das QINQ-Paket-Umleitungsmodul (50) konfiguriert ist, um eine zweite entsprechende Beziehung zwischen dem benutzerseitigen Anschluss und den zwei VLAN-Labels des benutzerseitigen Anschlusses festzusetzen, und wenn das QINQ-Paket, das die zwei VLAN-Labels des benutzerseitigen Anschlusses aufweist, durch den Rückschleifenanschluss eintritt, Umleiten des QINQ-Pakets zu dem benutzerseitigen Anschluss gemäß der zweiten entsprechenden Beziehung.

7. Implementierungsvorrichtung gemäß Anspruch 6, wobei das Rückschleifenanschlussfestsetzungsmodul (20) ferner konfiguriert ist, um nach dem Festsetzen des Rückschleifenanschlusses eine Export-Sturmkontrolle an dem Rückschleifenanschluss festzusetzen.

8. Implementierungsvorrichtung gemäß Anspruch 6 oder 7, wobei das MPLS-Konfigurationsmodul (10) ferner konfiguriert ist, um ein QINQ-Paket, das durch den benutzerseitigen Anschluss des Switches eintritt, mit einem MPLS-Label zu verkapseln, um ein MPLS-Paket zu erhalten, und dann das MPLS-Paket durch den netzseitigen Anschluss des Switches gesendet wird.

## Revendications

1. Un procédé de mise en oeuvre pour accéder à un service VPWS (Virtual Private Wire Service, service filaire privé virtuel) via QINQ, comprenant le fait de :
configurer (101) une MPLS (Multi-Protocol Label Switching, commutation multiprotocole par étiquette) sur un commutateur, de manière à faire en sorte qu'une étiquette MPLS soit ôtée d'un paquet MPLS qui entre via un port côté réseau du commutateur afin d'obtenir un paquet QINQ et envoyer ensuite le paquet QINQ via un port côté utilisateur du commutateur, le paquet QINQ comprenant deux étiquettes VLAN (Virtual Local Area Network, réseau local virtuel), à savoir une étiquette VLAN de couche interne et une étiquette VLAN de couche externe ; définir un port de bouclage du commutateur (102) ;
**caractérisé par** le fait de :
modifier (103) une configuration MPLS du commutateur, de manière à faire en sorte que l'étiquette MPLS soit ôtée du paquet MPLS qui entre via le port côté réseau du commutateur afin d'obtenir le paquet QINQ et envoyer ensuite le paquet QINQ via le port de bouclage ; et remplacer l'étiquette VLAN de couche externe du paquet QINQ par une valeur arbitraire ;
définir une première relation correspondante entre la valeur arbitraire et deux étiquettes VLAN du port côté utilisateur, et remplacer les deux étiquettes VLAN du paquet QINQ par les deux étiquettes VLAN du port côté utilisateur conformément à la première relation correspondante lors de l'envoi du paquet QINQ via le port de bouclage (104) ;
définir une deuxième relation correspondante entre le port côté utilisateur et les deux étiquettes VLAN du port côté utilisateur, et lorsque le paquet QINQ qui a les deux étiquettes VLAN du port côté utilisateur rentre via le port de bouclage, rediriger le paquet QINQ vers le port côté utilisateur conformément à la deuxième relation correspondante (105).

2. Le procédé de mise en oeuvre selon la revendication 1, dans lequel l'étape consistant à définir la première relation correspondante entre la valeur arbitraire et deux étiquettes VLAN du port côté utilisateur comprend le fait de : définir une liste ACL (Access Control List, liste de contrôle d'accès) d'export au niveau du port de bouclage, la liste ACL d'export mémorisant la première relation correspondante entre la valeur arbitraire et les deux étiquettes VLAN du port côté utilisateur.

3. Le procédé de mise en oeuvre selon la revendication 1 ou la revendication 2, dans lequel l'étape consistant à définir la deuxième relation correspondante entre le port côté utilisateur et les deux étiquettes VLAN du port côté utilisateur comprend le fait de :
définir une liste ACL d'entrée au niveau du port de bouclage, la liste ACL d'entrée mémorisant la deuxième relation correspondante entre les deux étiquettes VLAN du port côté utilisateur et le port côté utilisateur.

4. Le procédé de mise en oeuvre selon la revendication 3, le procédé comprenant en outre, après la définition du port de bouclage du commutateur, le fait de : définir un contrôle de tempête d'export au niveau du port de bouclage.

5. Le procédé de mise en oeuvre selon la revendication 1, dans lequel l'étape consistant à configurer la MPLS comprend en outre le fait : d'encapsuler un paquet QINQ qui entre via le port côté utilisateur du commutateur avec une étiquette MPLS afin d'obtenir un paquet MPLS, et envoyer ensuite le paquet MPLS via le port côté réseau du commutateur.

6. Un appareil de mise en oeuvre pour accéder à un service VPWS (Virtual Private Wire Service) via QINQ, comprenant : un module de configuration MPLS (Multi-Protocol Label Switching) (10), un module de définition de port de bouclage (20), un module de modification de configuration MPLS (30), un module de remplacement d'étiquette VLAN (40) et un module de redirection de paquet QINQ (50) ; dans lequel le module de configuration MPLS (10) est configuré pour configurer une MPLS sur un commutateur, de manière à faire en sorte qu'une étiquette MPLS soit ôtée d'un paquet MPLS qui entre via un port côté réseau du commutateur afin d'obtenir un paquet QINQ et envoyer ensuite le paquet QINQ via un port côté utilisateur du commutateur, le paquet QINQ comprenant deux étiquettes VLAN (Virtual Local Area Network), à savoir une étiquette VLAN de couche interne et une étiquette VLAN de couche externe ;
le module de définition de bouclage (20) est configuré pour définir un port de bouclage du commutateur ;
**caractérisé en ce que** :
le module de modification de configuration MPLS (30) est configuré pour modifier une configuration MPLS du commutateur, de manière à faire en sorte que l'étiquette MPLS soit ôtée du paquet MPLS qui entre via le port côté réseau du commutateur afin d'obtenir le paquet QINQ et envoyer ensuite le paquet QINQ via le port de bouclage ; et
pour remplacer une étiquette VLAN de couche externe du paquet QINQ par une valeur arbitraire ;
le module de remplacement d'étiquette VLAN (40) est configuré pour définir une première relation correspondante entre la valeur arbitraire et deux étiquettes VLAN du port côté utilisateur, et remplacer les deux couches d'étiquettes VLAN du paquet QINQ par les deux étiquettes VLAN du port côté utilisateur conformément à la première relation correspondante lors de l'envoi du paquet QINQ via le port de boucle ;
le module de redirection de paquet QINQ (50) est configuré pour définir une deuxième relation correspondante entre le port côté utilisateur et les deux étiquettes VLAN du port côté utilisateur, et lorsque le paquet QINQ qui a les deux étiquettes VLAN du port côté utilisateur entre via le port de bouclage, rediriger le paquet QINQ vers le port côté utilisateur conformément à la deuxième relation correspondante.

7. L'appareil de mise en oeuvre selon la revendication 6, dans lequel le module de définition de port de bouclage (20) est en outre configuré pour définir un contrôle de tempête d'export au niveau du port de bouclage après la définition du port de bouclage.

8. L'appareil de mise en oeuvre selon la revendication 6 ou la revendication 7, dans lequel le module de configuration MPLS (10) est en outre configuré pour encapsuler un paquet QINQ qui entre via le port côté utilisateur du commutateur avec une étiquette MPLS afin d'obtenir un paquet MPLS, et envoyer ensuite le paquet MPLS via le port côté réseau du commutateur.
